# EUROPÄISCHE PATENTSCHRIFT

(11) **EP 0 426 141 B1**
(45) Veröffentlichungstag und Bekanntmachung des Hinweises auf die Patenterteilung: **08.06.1994**
(21) Anmeldenummer: 90120862.9
(22) Anmeldetag: 31.10.1990
(51) Int. Cl.: C09D 5/32, C09D 5/24, C09D 5/30

(54) **Material mit radarabsorbierenden Eigenschaften und dessen Verwendung bei Verfahren zur Tarnung gegen Radarerfassung**
Material with radar absorbing properties and its use in methods of camouflage against radar investigation
Matériau absorbant les radiations radar et son utilisation dans les procédés de camouflage contre l'action des radars

(30) Priorität: 01.11.1989 DE 3936291
(43) Veröffentlichungstag der Anmeldung: 08.05.1991
(73) Patentinhaber: Weilburger Lackfabrik J. Grebe GmbH, D-35781 Weilburg (DE); Hugo, Gerd, 86938 Schondorf (DE)
(72) Erfinder: Hugo, Gerd, W-8913 Schondorf a.A. (DE); Bauerett, Georg, W-5014 Kerpen 8 (DE); Becher, Wolfgang, W-5600 Wuppertal 1 (DE)
(74) Vertreter: Türk, Gille, Hrabal, Leifert

(56) Entgegenhaltungen:
- DE-A- 3 507 889
- FR-A- 2 131 929

## Beschreibung

Die Erfindung betrifft ein Material mit radarabsorbierenden Eigenschaften im Bereich der elektromagnetischen cm- und mm-Wellen, das sich aufgrund seiner speziellen Merkmale in besonderer Weise als Beschichtung zur Radartarnung von mobilen oder ortsfesten Objekten eignet. Für spezielle Anwendungen kann es dabei auch als Folie bzw. Matte vorgefertigt werden, um dann auf mobile oder ortsfeste Objekte aufgebracht, z.B. geklebt zu werden.

Die Tarnung militärischer Objekte gegenüber Radarerfassung beruht auf der Aufbringung von Materialien, deren Reflexionsgrad R für Radarwellen in dem betreffendem Frequenzbereich hinreichend klein ist, auf das zu tarnende Objekt. Für landgestützte Objekte ist die Forderung R<0,1 oder ausgedrückt als Dezibel <-10 dB typisch. Die Erfüllung dieser Forderung in einem ausreichend breiten Frequenzbereich ist ein wichtiges Bewertungsmerkmal für einen Radarabsorber (Breitbandigkeit). Im Idealfall soll ein genügend kleiner Wert von R für alle Wellenlängen unterhalb einer für den jeweiligen Absorbertyp charakteristischen Grenzwellenlänge λₒ erreicht werden.

In der DE-OS 15 91 114 wird ein Pyramidenabsorber aus Schaumstoff beschrieben, dessen elektrische Verluste durch die Einlagerung von Graphit oder Ruß bewirkt werden. Nachteilig an dieser Anordnung ist, daß das Verhältnis von Absorberdicke zu Grenzwellenlänge d/λₒ im allgemeinen größer 1 ist. Wollte man ein Objekt mit dieser Anordnung gegen Radaraufklärung tarnen, so müßte man eine äußerst dicke Schicht aufbringen, die nach dem Prinzip dieses Absorbers eine geringe Dichte haben muß (Schaumstoff) und damit mechanisch nicht belastbar ist. Es wäre also nicht möglich ein dermaßen getarntes Objekt zu begehen, was z.B. bei einem Panzer jedoch zwingend erforderlich ist.

Aus der DE-OS 33 07 066 ist eine radarabsorbierende Anordnung bekannt, die durch einen schichtweisen Aufbau mit zunehmender Konzentration (auch als "Radarsumpf" bekannt) von elektrisch leitenden Teilchen oder auch ferritischen Füllstoffen, gekennzeichnet ist. Nachteilig ist an dieser Anordnung, der äußerst komplizierte Aufbau der aufeinander abgestimmten Schichten. Eine breitbandige Absorption von beispielsweise 10 bis 100 GHz mit kontinuierlich - 10 dB Dämpfung, ist mit dieser Anordnung nur bei großen Schichtdicken möglich.

Aus der DE-AS 27 15 823 ist eine Wand zum Absorbieren einer elektomagnetischen Welle bekannt, in der ferromagnetische Materialien zur Radarabsorption eingesetzt werden. Nachteilig ist hier, daß die Anordnung nur in Frequenzbereichen unterhalb 10 GHz eingesetzt werden kann, da die benutzten ferromagnetischen Materialien bekanntermaßen oberhalb 10 GHz nur noch schwach und mit zunehmender Frequenz, nicht mehr absorbierend wirken. Ferner ist das hohe spezifische Gewicht der Materialien nachteilig, da der Einsatzbereich hierdurch stark eingeschränkt wird.

In der DE-OS 35 07 889 wird eine Beschichtung beschrieben, in die ein radarabsorbierender Wirkstoff eingebettet ist. Die Leitfähigkeit des Werkstoffs, sowie seine Abmessungen werden nicht spezifiziert. Solche herkömmlichen Beschichtungen vermögen Radarstrahlen allenfalls in einem engen Frequenzbereich zu absorbieren.

Aufgabe der Erfindung ist die Bereitstellung eines Materials mit radarabsorbierenden Eigenschaften, das für Radar-Tarnzwecke in einem breiten Frequenzbereich geeignet ist, leicht appliziert werden kann und gegebenenfalls hohen mechanischen Belastungen standhält.

Diese Aufgabe wird durch ein Material mit radarabsorbierenden Eigenschaften im Bereich der elektromagnetischen cm- und mm-Wellen gelöst, das den Gegenstand der Erfindung bildet, und das dadurch gekennzeichnet ist, daß es enthält
a) eine Schicht aus einem Bindemittel (1) mit einem elektrischen Widerstand von >10⁹ Ωcm und einer Dielektrizitätskonstante εγ im Bereich von 1,5 bis 4 und darin eingebettet 10 bis 60 Vol-%, bezogen auf das Volumen der gesamten Schicht, erste elektrisch leitende Teilchen (2) mit einer spezifischen Leitfähigkeit von 1 bis 100 (Ωm)⁻¹, enthaltend ein Bindemittel mit einem elektrischen Widerstand von >10⁹ Ohm x cm und einer Dielektrizitätskonstante εγ im Bereich von 1,5 bis 5 und in dem Bindemittel dispergierte zweite elektrisch leitende Teilchen (3) mit einer spezifischen Leitfähigkeit von 1000 bis 62 x 10⁸ (Ωm)⁻¹, die durch Berührung und Kettenbildung untereinander die Leitfähigkeit der ersten elektrisch leitenden Teilchen (2) bewirken, wobei die maximalen und minimalen Lineardimensionen der ersten elektrisch leitenden Teilchen (2) bei 1 bis 7 mm liegen und die ersten elektrisch leitenden Teilchen (2) gleichmäßig so über das Volumen des Bindemittels (1) verteilt sind, daß die Richtung ihrer maximalen oder minimalen Lineardimension im wesentlichen senkrecht zur Schicht liegt und die Schichtdicke (6) mit der die Senkrechte bestimmenden Lineardimension übereinstimmt und wobei die spezifische Leitfähigkeit aller ersten elektrisch leitenden Teilchen (2) sowie deren Größe annähernd gleich sind und
b) ein Substrat (9), das im Bereich der elektromagnetischen cm- und mm-Wellen angenähert vollständig reflektierend ist, auf das die Schicht entweder direkt oder über eine oder mehrere Zwischenschichten aufgebracht ist.

Erfindungsgemäß kann die vorstehend definierte Schicht entweder auf das zu tarnende Objekt aufgebracht werden, sofern dessen Oberfläche im Bereich der elektromagnetischen cm- und mm-Wellen angenähert vollständig reflektierend ist. Das Substrat oder Objekt kann auch mit beispielsweise einer Haftgrundierung oder einer Korrosionsschutzschicht versehen sein, die bei Auftrag der Schicht zu Zwischenschichten werden. Es ist auch möglich die Schicht zunächst auf ein Substrat, wie eine Folie oder eine Matte aufzubringen, die dem Reflexions-Erfordernis genügt. Anschließend kann eine derart behandelte Folie oder Matte zur Abdeckung des zu tarnenden Objektes dienen oder an dem zu tarnenden Objekt befestigt, beispielsweise aufgeklebt werden.

Erfindungsgemäß wird auf dem reflektierenden Substrat eine Schicht bereitgestellt, in der elektrisch leitende Teilchen mit einer spezifischen Leitfähigkeit von 1 bis 100 (Ωm)⁻¹ dispergiert sind. Bevorzugt beträgt die spezifische Leitfähigkeit 1 bis 20 (Ωm)⁻¹.

Es ist günstig, wenn die Teilchen minimale und maximale Lineardimensionen aufweisen, die wenig voneinander abweichen, d.h. die vergleichbarer Größenordnung sind. Im Idealfall weisen die Teilchen somit die Form oder angenäherte Form einer Kugel auf. Jedoch ist diese Form nicht zwingend. Beispielsweise sind auch Quader-, Linsen-, Plättchen- und Zylinderformen und ähnliche Formen geeignet, deren maximale und minimale Lineardimensionen jeweils bei 1 bis 7 mm liegen.

Die elektrisch leitfähigen Teilchen bestehen aus nicht leitfähigen Kunststoffmaterialien, in die elektrisch leitfähige Stoffe eingearbeitet sind. Beispiele für diese Kunststoffmaterialien sind Polyvinylchlorid, Polyethylen, Ethylvinylacetat, oder Kunststoffe bzw. Kunstharze, Naturharze und Gummi, wie sie beispielsweise für das nachstehend definierte Bindemittel verwendet werden, wobei als leitfähige Stoffe beispielsweise Rußteilchen eingearbeitet sein können. Tatsächlich können die eingesetzten Teilchen aus dem gleichen Material bestehen, wie das Bindemittel, in dem sie dispergiert sind, wobei die Teilchen jedoch elektrisch leitfähige Stoffe enthalten. Die leitfähigen Teilchen können beispielsweise als Granulate aus den jeweiligen leitfähiges Material enthaltenden Kunststoffen hergestellt werden. Geeignet sind beispielsweise auch Teilchen aus intrinsisch leitfähigem Kunststoff wie z.B. Polypyrrole oder Polyaniline, sofern sie in ihrem Aufbau der erfindungsgemäßen Spezifikation entsprechen.

In der in dem erfindungsgemäßen radarabsorbierenden Material vorhandenen Schicht sind die vorstehend erläuterten elektrisch leitenden Teilchen in ein Bindemittel mit hohem elektrischem Widerstand, das praktisch nicht leitend ist, eingebettet bzw. darin dispergiert.

Das Bindemittel wird je nach den gewünschten Eigenschaften gewählt und unterliegt keinen Beschränkungen. Beispielsweise kommen Kunststoffe, Kunstharze, Naturharze und Gummis infrage, wie sie beispielsweise auf dem Lacksektor üblich sind und verwendet werden. Besonders geeignet sind lösemittelfreie Bindemittel, die aus einem filmbildenden Material bestehen, das unter Zusatz von reaktiven Stoffen gehärtet werden kann, wie beispielsweise übliche Zweikomponenten-Beschichtungsmittel, die beispielsweise aus einem flüssigen Epoxidharz und einem dafür geeigneten Härter bestehen. Es sind jedoch auch Bindemittel geeignet, wie sie in üblichen lösemittelhaltigen Überzugsmitteln und Überzugsmitteln auf der Basis wässriger Dispersionen enthalten sind. Es sind auch Bindemittel geeignet, die in Form einer Schmelze aufgebracht werden können. Beispiele für geeignete Bindemittel- und Härter-Typen für die Zweikomponenten-Beschichtungsmittel sind Epoxyharze, gehärtet mit Aminen, Amiden, Polyamiden oder Isocyanaten; OH-Gruppen-haltige Polyester und/oder OH-Gruppen-haltige Polyether und/oder OH-Gruppen-haltige Acrylharze, gehärtet mit Isocyanaten; ungesättigte Acrylharze und/oder ungesättigte Polyester, gehärtet mit Peroxiden. Das Bindemittel kann je nach der gewünschten Belastbarkeit des fertiggestellten Überzugs gewählt werden.

Die elektrisch leitfähigen Teilchen sind in der in dem erfindungsgemäßen radarabsorbierenden Material enthaltenen bindemittelhaltigen Schicht gleichmäßig über das Volumen des Bindemittels verteilt. Im Idealfall sind die eingebetteten leitfähigen Teilchen so verteilt, daß die Schwerpunkte der Teilchen gleichen Abstand von dem jeweiligen Schwerpunkt der Nachbarteilchen haben. Dieser Idealfall kann in der Praxis selbstverständlich nur in angenähertem Zustand erreicht werden. Im Prinzip genügt es, wenn eine statistische Verteilung vorliegt. Diese statistische Verteilung ist insbesondere dann ausreichend, wenn die maximale und die minimale Lineardimension der elektrisch leitfähigen Teilchen nur geringfügig voneinander abweichen oder gleich sind.

Die das elektrisch nicht leitende Bindemittel enthaltende Schicht des erfindungsgemäßen radarabsorbierenden Materials entspricht in der Schichtstärke entweder der minimalen oder der maximalen Lineardimension der darin enthaltenen leitfähigen Teilchen. Die in dieser Schicht enthaltenen leitfähigen Teilchen sind im wesentlichen so ausgerichtet, daß ihre minimale oder maximale Lineardimension senkrecht zur Ausbreitungsrichtung der Schicht liegt. In der Schicht liegen somit die leitfähigen Teilchen im Prinzip räumlich nebeneinander und nicht übereinander angeordnet.

Zur Herstellung der die elektrisch leitfähigen Teilchen enthaltenden Schicht kann jedes Verfahren verwendet werden, das eine möglichst gleichmäßige Verteilung der elektrisch leitfähigen Teilchen in dem Bindemittel und einen Auftrag ermöglicht, durch den Schichtdicken erzielt werden, die entweder der minimalen Lineardimension der senkrecht zur Ausbreitungsrichtung der Schicht darin "liegenden" Teilchen oder der maximalen Lineardimension der zur Ausbreitungsrichtung der Schicht senkrecht "stehenden" Teilchen entspricht. Im Prinzip ist für Teilchen, deren minimale und maximale Lineardimensionen sehr wenig voneinander abweichen, das Dispergieren der Teilchen in einer Lösung des Bindemittels in organischem Lösemittel, in einer wässrigen Dispersion des Bindemittels oder in einer Schmelze des Bindemittels und anschließender Auftrag des so erhaltenen Überzugsmittels in einer den Teilchenabmessungen entsprechenden Schichtdicke, beispielsweise durch Rakelauftrag oder Aufspachteln, geeignet. Anschließend kann dann eine Härtung, beispielsweise unter Entfernung des Lösemittels oder Wassers, erfolgen. Es ist jedoch auch möglich beispielsweise die Teilchen zunächst auf eine Folie, beispielsweise eine Folie aus dem Bindemittel oder aber auch eine Folie aus dem angenähert vollständig reflektierenden Material oder direkt auf das zu tarnende Objekt, falls dessen Oberfläche angenähert vollständig reflektierend ist, in der gewünschten Verteilung aufzubringen, beispielsweise auch aufzukleben und dann das Harz in gelöster oder dispergierter oder geschmolzener Form in der geeigneten Schichtdicke aufzubringen, worauf ein üblicher Härtungsvorgang erfolgen kann.

Das in der im erfindungsgemäßen Material eingesetzten Schicht enthaltene Bindemittel kann mit üblichen Zusatzstoffen versetzt werden, wie beispielsweise Thixotropiermitteln, um die rheologischen Eigenschaften beim Auftrag zu verbessern, Stoffen mit flammhemmenden Eigenschaften, und üblichen Additiven, wie sie Überzugsmitteln bzw. Bindemitteln und thermoplastischen Harzen zugesetzt werden. Derartige Stoffe können in den Bindemitteln gelöst oder dispergiert sein. Sie können auch als teilchenförmige Stoffe vorliegen.

Es hat sich gezeigt, daß es erfindungsgemäß besonders günstig ist, Bindemittel einzusetzen, deren Dielektrizitätskonstante in der Größenordnung der Dielektrizitätskonstante von Luft oder Vakuum, die jeweils bei etwa 1 liegt, entspricht. Da normalerweise jedoch Bindemittel und thermoplastische Harze Dielektrizitätskonstanten in der Größenordnung von 3 - 5 haben, ist es erfindungsgemäß möglich den Bindemitteln und Harzen teilchenförmige Stoffe zuzusetzen, die die Dielektrizitätskonstante verringen. Beispiele für derartige teilchenförmige Stoffe, die den Bindemitteln zugesetzt werden können, sind gasgefüllte (z.B. luftgefüllte) Hohlkugeln, wie gasgefüllte (z.B. luftgefüllte) Glaskügelchen und teilchenförmige Schaumstoffmaterialien. Die Größenabmessungen derartiger teilchenförmiger Stoffe können bis zur Größe der eingesetzten elektrisch leitenden Teilchen betragen, liegen jedoch bevorzugt darunter. Anstelle der gasgefüllten Hohlkugeln kann auch ein Gas, wie beispielsweise Luft, bläschenförmig in das Bindemittel eingearbeitet sein. Dadurch ergibt sich Sein ähnlicher Effekt wie beim Zusatz der gasgefüllten Hohlkugeln oder teilchenförmigen Schaumstoffmaterialien.

Den erfindungsgemäß eingesetzten Bindemitteln können auch weitere teilchenförmige Stoffe zugesetzt werden, die verschiedenen Zwecken dienen können. Die Abmessungen derartiger Stoffe hängen von deren geometrischer Form ab, sie liegen, wie vorstehend angegeben im allgemeinen bei Größen bis zu denen der jeweils verwendeten elektrisch leitenden Teilchen, bevorzugt jedoch darunter. Faserförmige Stoffe können auch größere Lineardimensionen haben. Es können beispielsweise Pigmente zugesetzt werden, die auch elektrisch leitfähig sein können. Die elektrische Leitfähigkeit derartiger Pigmente liegt beispielsweise im Bereich von 10⁻⁸ bis 100 (Ωm)⁻¹, insbesondere von 10⁻⁸ bis 10⁻⁴ (Ωm)⁻¹. Es können auch teilchenförmige Stoffe zugesetzt werden, die flammhemmende oder thixotrope Eigenschaften haben oder die zu magnetischen Verlusten führen. Stoffe, die zu magnetischen Verlusten führen, sind beispielsweise Ferrite und ferritische Materialien, die eine verbesserte Absorption bei tiefen Frequenzen im Bereich von etwa 10 GHz, d.h. im cm-Wellenbereich ergeben. Es können jedoch auch die Festigkeit verbessernde teilchenförmige Stoffe zugesetzt werden, wie beispielsweise Kurzschnittfasern, wobei derartige Kurzschnittfasern Längen von beispielsweise 0,1 - 20 mm aufweisen können. Derartige Fasern können auch elektrisch leitfähig sein, beispielsweise sind Kohlefasern geeignet. Elektrisch leitfähige Kurzschnittfasern weisen beispielsweise eine spezifische Leitfähigkeit von 10⁻⁸ bis 100 (Ωm)⁻¹, insbesondere von 10⁻⁸ bis 10⁻⁴ (Ωm)⁻¹ auf. Beim Einsatz leitfähiger Fasern wird nicht nur die Festigkeit verbessert, sondern es können auch Verschiebungen im Frequenzbereich der zu absorbierenden Strahlung erzielt werden.

Die bindemittelhaltige Schicht des erfindungsgemäßen radarabsorbierenden Materials wird entweder direkt oder in geringem Abstand auf ein Substrat aufgebracht, das im Bereich der elektromagnetischen cm- und mm-Wellen angenähert vollständig reflektierend ist. In geringem Abstand bedeutet, daß das reflektierende Material beispielsweise mit einem Überzug, wie einer Grundierungsschicht, versehen sein kann. Jedoch ist es günstig, wenn sich die leitfähigen Teilchen der bindemittelhaltigen Schicht in möglichst geringem Abstand von dem reflektierenden Substrat befinden. Ein Leitfähigkeitskontakt ist jedoch nicht notwendig.

Bei dem reflektierenden Substrat handelt es sich bevorzugt um ein elektrisch leitendes Material mit einer spezifischen Leitfähigkeit, die größer als 1000 (Ωm)⁻¹ ist. Es kann sich hierbei um die gegebenenfalls mit einer Überzugs- wie Grundierungsschicht versehene Oberfläche des zu tarnenden Objekts handeln, oder aber kann es sich um ein Substrat handeln, das beispielsweise in Folien- oder Mattenform vorliegt, und anschließend zur Abdeckung oder zum Aufbringen, beispielsweise Aufkleben auf zu tarnende Objekte geeignet ist.

Gemäß einer weiteren Ausführungsform kann das erfindungsgemäße Material mit radarabsorbierenden Eigenschaften auf der Oberfläche der bindemittelhaltigen Schicht mit einer oder mehreren weiteren Schichten in einer Gesamtschichtdicke von kleiner 1 mm, vorzugsweise kleiner 0,1 mm versehen sein, wobei die Oberfläche der Gesamtschicht im Spektralbereich von 0,1 bis 14 um oder in Teilbereichen dieses Spektralbereichs tarnwirksame Eigenschaften aufweist. Derartige Schichten ergeben somit eine zusätzliche Tarnwirkung im Bereich sichtbarer Wellen oder IR-Wellen. Beispielsweise kann die Oberfläche im Spektralbereich des thermischen Infrarot von 4 - 14 »m niedrig emittierend sein, mit einem Emissionsfaktor der kleiner als 0,9, vorzugsweise kleiner als 0,7 ist.

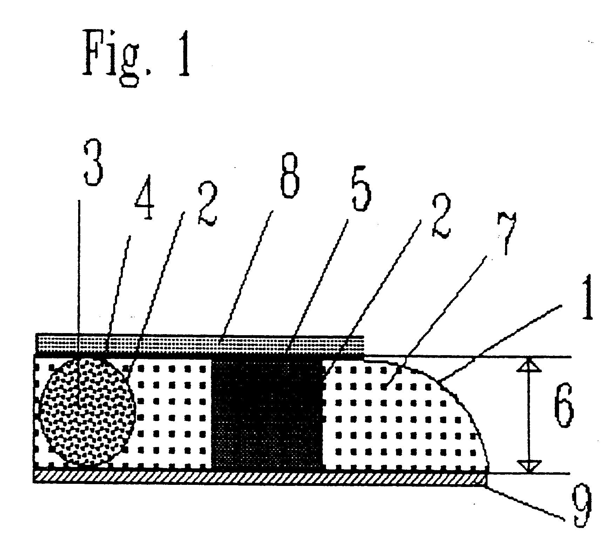

Die beigefügte Fig. 1 stellt ein Beispiel für das erfindungsgemäße Material mit radarabsorbierenden Eigenschaften dar. Sie zeigt einen Schnitt durch ein derartiges Material.

Dabei ist (1) das Bindemittel mit hohem elektrischen Widerstand, in das elektrisch leitende Teilchen (2) mit einer spezifischen Leitfähigkeit von -1 1 bis 100 (Ωm)⁻¹ mit einem Durchmesser von 1 bis 7 mm dispergiert sind. (3) zeigt die elektrisch leitenden Stoffe, die in einem zweiten Bindemittel (4) mit hohem elektrischen Widerstand zur Bildung der Teilchen (2) dispergiert sind und (5) zeigt als Teilchen (2) einen intrinsisch leitenden Kunststoff. (6) zeigt die Schichtdicke des Materiales (1), die dem Durchmesser der Teilchen (2) etwa entspricht. (7) zeigt weitere elektrisch leitende oder nicht leitende teilchenförmige Stoffe, die in das Material (1) eingearbeitet sind. (8) zeigt eine oberste Schicht mit tarnwirksamen Eigenschaften im Spektralbereich 0,1 bis 14 »m und (9) zeigt eine im Bereich der elektromagnetischen cm- und mm-Wellen angenähert vollständig reflektierende Schicht.

Durch das erfindungsgemäße Material mit radarabsorbierenden Eigenschaften wird eine Tarnmöglichkeit für einen breiten Frequenzbereich erzielt. Es wird ein sehr kleiner Wert für den Reflektionsgrad R für Radarwellen für alle Wellenlängen in einem breiten Wellenlängenbereich erzielt. Dabei ergibt sich ein niedriger Wert für das Verhältnis d/λₒ, so daß ein dünner Radarabsorber entsteht, der niedrige Materialmengen, Flächengewichte und niedrige Kosten erlaubt.

Eine mit dem erfindungsgemäßen, dielektrischen Material getarnte Oberfläche ist begehbar und hält hohen mechanischen Belastungen stand. Ist das Material beispielsweise für eine untere Grenzfrequenz von 10 GHz ausgelegt, so beträgt die Materialdicke nur 3,5 mm, was bedeutet, daß das Verhältnis von Materialdicke zu unterer Grenzwellenlänge d/λₒ fast bei 0,1 liegt. Der Aufbau einer Radartarnung auf einer Oberfläche ist unkompliziert. Das erfindungsgemäße dielektrische Material kann in einem Arbeitsgang, in einer Schicht auf die zu tarnende Oberfläche aufgespachtelt werden. Durch das typische spezifische Gewicht des erfindungsgemäßen Materiales bei beispielsweise 0,4 bis 2,5, bevorzugt 0,6 bis 1,3, gibt es keine Einschränkungen für den Einsatzbereich. Es absorbiert Radarstrahlung in einem breiten Frequenzbereich.

### Beispiel 1:

Es wurden 50 g von handelsüblichen, rußgefüllten Polyvinylchlorid (PVC)-Teilchen, deren Form die eines Zylinders mit 2 mm Durchmesser und 2,5 mm Länge war, gleichmäßig auf einer Metallplatte mit den Maßen 24 x 24 cm verteilt. Die spezifische Leitfähigkeit der PVC/Ruß-Teilchen lag bei ca. 5 (Ωm)⁻¹. Die resultierende Radarreflexionsdämpfung in Abhängigkeit von der Frequenz war dabei folgende:

| | | | | |
|---|---|---|---|---|
| Frequenz in [GHz] | 18 | 35 | 51 | 94 |
| Dämpfung in [-dB] | 6,5 | 22 | 13 | 9,5 |

Da jedoch die rußgefüllten PVC-Teilchen auf der Platte nur lose herumlagen und in dieser Form nicht zur Radartarnung eingesetzt werden können, wurden die Teilchen in einem handelsüblichen zweikomponentigen Epoxidharz dispergiert und auf eine Metallplatte gerakelt. Die Zusammensetzung war dabei folgende:
72 g Epoxidharz
30 g Härter
50 g PVC/Ruß-Teilchen
Die Masse wurde gleichmäßig auf einer Metallplatte mit den Maßen 24 x 24 cm verteilt, gehärtet und radarmäßig vermessen. Die Dicke der ausgehärteten Schicht lag bei 2 mm. Die resultierende Radarreflexionsdämpfung in Abhängigkeit von der Frequenz war dabei folgende:

| | | | |
|---|---|---|---|
| Frequenz in [GHz] | 10 | 15 | 18 |
| Dämpfung in [-dB] | 10 | 14 | 20 |

### Beispiel 2:

Zu der Rezeptur des Beispiels 1 wurden noch Mikrohohlglaskugeln mit einer mittleren Dichte von 0,24 zugesetzt. Die Zusammensetzung war dann folgende:
72 g Epoxidharz
30 g Härter
17 g Mikrohohlglaskugeln
50 g PVC/Ruß-Teilchen
Die Masse wurde gleichmäßig auf einer Metallplatte mit den Maßen 24 x 24 cm verteilt, gehärtet und radarmäßig vermessen. Die Dicke der ausgehärteten Schicht lag bei 2 mm. Die resultierende Radarreflexionsdämpfung in Abhängigkeit von der Frequenz war dabei folgende:

| | | | | |
|---|---|---|---|---|
| Frequenz in [GHz] | 18 | 35 | 51 | 94 |
| Dämpfung in [-dB] | 12 | 9 | 10 | 11 |

In allen interessierenden Frequenzbereichen lag die Dämpfung bei ca. -10 dB.

### Beispiel 3:

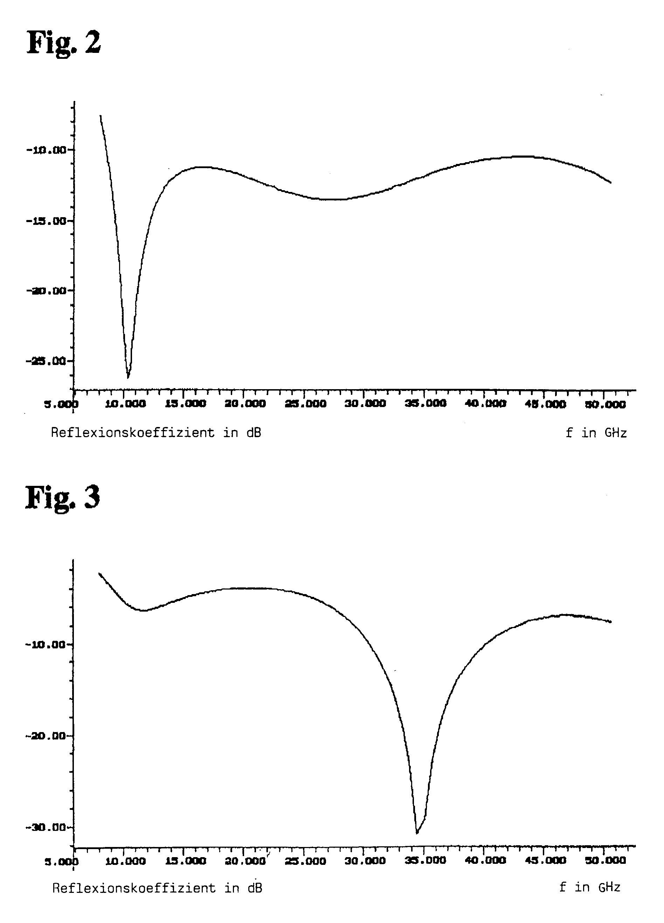

Bei diesem Beispiel wurden kugel- bis zylinderähnliche Teilchen mit einem Durchmesser von ca. 3,5 mm eines Ethylenvinylacetat-Copolymeren mit einer Pigmentrußkonzentration von 35 % einer Leitrußpräparation (Corax P der Firma Degussa) eingesetzt. Die spezifische Leitfähigkeit der Teilchen lag bei ca. 10 (Ωm)⁻¹. Es wurde eine Mischung mit folgender Zusammensetzung gemacht:
66 g Epoxidharz
27,5 g Härter
20 g Mikrohohlglaskugeln
60 g Ethylvinylacetat/Ruß-Teilchen
Die Masse wurde gleichmäßig auf einer Metallplatte mit den Maßen 24 x 24 cm verteilt, gehärtet und breitbandig radarmäßig vermessen. Die Dicke der ausgehärteten Schicht lag bei 3,5 mm. Die resultierende Radarreflexionsdämpfung ist in Fig. 2 dargestellt.

Im Frequenzbereich bei 10 GHz konnte eine Radarreflexionsdämpfung besser 20 dB gemessen werden. Bei allen höheren Meßfrequenzen war die Dämpfung immer noch besser 10 dB.

### Vergleichsversuch 1

Als Gegenversuch wurde die gleiche Mischung wie in Beispiel 3 angesetzt, wobei die Ethylenvinylacetat/Ruß-Teilchen jedoch auf einen mittleren Durchmesser von etwa 0,3 mm heruntergemahlen wurden. Die Masse wurde wiederum auf eine Metallplatte mit den Maßen 24 x 24 cm verteilt, daß eine Schicht mit 3,5 mm Dicke entstand. Nach Aushärtung wurde die Platte breitbandig radarmäßig vermessen. Die resultierende Radarreflexionsdämpfung ist in Fig. 3 dargestellt.

Bei 10 GHz konnte keine nennenswerte Absorption mehr gemessen werden. Bis etwa 30 GHz war die Absorption schlechter als 10 dB und lag bei 7 bis maximal 8 dB. Bei 35 GHz wurde eine Absorption besser 20 dB festgestellt. Bei höheren Frequenzen war die Absorption jedoch wieder schlechter als 10 dB. Für einen breitbandigen Radarabsorber ist diese Anordnung nicht tauglich.

### Vergleichsversuch 2

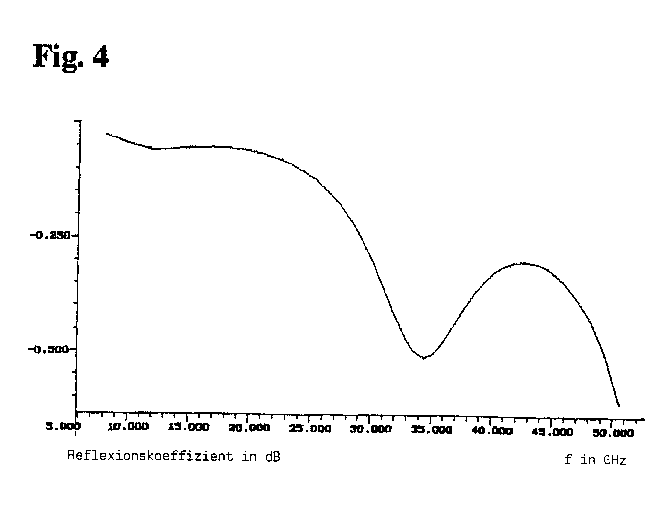

Als weiteren Gegenversuch zu Beispiel 3 wurde die gleiche Menge Leitruß (Corax P) wie sie in der Mischung aus Beispiel 3 enthalten ist, direkt im Bindemittel des Radarcoatings dispergiert und mit einer Schichtdicke von 3,5 mm auf eine Metallplatte mit den Maßen 24 x 24 cm aufgetragen. Die in der Rezeptur aus Beispiel 3 enthaltene Menge Ethylenvinylacetat wurde durch den entsprechenden Anteil Epoxidharz ausgeglichen. Die spezifische Leitfähigkeit der Leitrußteilchen lag bei etwa 5000 (Ωm)⁻¹. Der Durchmesser der Teilchen lag bei 5 bis 50 »m. Die Zusammensetzung war dabei folgende:
97,2 g Epoxidharz
40,5 g Härter
20 g Mikrohohlglaskugeln
21 g Leitruß (Corax P)
Nach Aushärtung der Schicht wurde die Anordnung breitbandig radarmäßig vermessen. Die resultierende Radarreflexionsdämpfung ist in Fig. 4 dargestellt. Über den gesamten Meßbereich war die Radarreflexionsdämpfung schlechter als 1 dB und damit für ein Radarcoating völlig untauglich.

### Beispiel 4:

Ähnlich Beispiel 1 wurden PVC/Ruß-Teilchen mit 2,5 mm Durchmesser und 2,5 mm Länge verwendet. Neben den PVC/Ruß-Teilchen wurden Kohlekurzschnittfasern mit einer Länge von 0,1 bis 1 mm und einer spezifischen Leitfähigkeit von 10⁻⁶ (Ωm)⁻¹ in ein Epoxidharz dispergiert. Die Zusammensetzung war folgende:
66 g Epoxidharz
27,5 g Härter
20 g Mikrohohlglaskugeln
1,5 g Kohlekurzschnittfasern
62 g PVC/Ruß-Teilchen
Die Masse wurde gleichmäßig auf einer Metallplatte mit den Maßen 24 x 24 cm verteilt, gehärtet und radarmäßig vermessen. Die Dicke der ausgehärteten Schicht lag bei 2,5 mm. Die resultierende Radarreflexionsdämpfung in Abhängigkeit von der Frequenz war dabei folgende:

| | | | | |
|---|---|---|---|---|
| Frequenz in [GHz] | 18 | 35 | 51 | 94 |
| Dämpfung in [-dB] | 6 | 12 | 14,5 | 15,5 |

### Beispiel 5:

Den im Beispiel4 beschriebenen PVC/Ruß-Teilchen mit 2,5 mm Durchmesser wurde als Wirkstoff zur Flammhemmung Aluminiumhydroxid hinzugefügt, die Zusammensetzung der Mischung war folgende:
50 g eines handelsüblichen Polyurethanbinders
41 g Härter
10 g Mikrohohlglaskugeln
50 g PVC/Ruß-Teilchen
10 g Aluminiumhydroxid
Die Masse wurde gleichmäßig auf einer Metallplatte mit den Maßen 24 x 24 cm verteilt, gehärtet und radarmäßig vermessen. Die Dicke der ausgehärteten Schicht lag bei 2,5 mm. Die resultierende Radarreflexionsdämpfung in Abhängigkeit von der Frequenz war dabei folgende:

| | | | | |
|---|---|---|---|---|
| Frequenz in [GHz] | 18 | 35 | 51 | 94 |
| Dämpfung in [-dB] | 8 | 10 | 17 | 15 |

### Beispiel 6:

Der gleichen Mischung, wie in Beispiel 5 beschrieben, wurden statt des Aluminiumhydroxid Metallplättchen aus einem elektrisch leitenden Mu-Metall, einer Legierung mit einer besonders hohen Permeabilität, beigefügt. Die Zusammensetzung der Mischung war folgende:
55,2 g Epoxidharz
23 g Härter
17 g Mikrohohlglaskugeln
15 g Mu-Metallplättchen
46,5 g PVC/Ruß-Teilchen mit 2 mm Durchmesser
Die Masse wurde gleichmäßig auf einer Metallplatte mit den Maßen 24 x 24 cm verteilt, gehärtet und radarmäßig vermessen. Die Dicke der ausgehärteten Schicht lag bei 2 mm. Die resultierende Radarreflexionsdämpfung in Abhängigkeit von der Frequenz war dabei folgende:

| | | | | |
|---|---|---|---|---|
| Frequenz in [GHz] | 7 | 12 | 18 | 35 |
| Dämpfung in [-dB] | 12 | 14 | 10 | 10 |

## Patentansprüche

1. Material mit radarabsorbierenden Eigenschaften im Bereich der elektromagnetischen cm- und mm-Wellen, **dadurch gekennzeichnet,** daß es enthält
a) eine Schicht aus einem Bindemittel (1) mit einem elektrischen Widerstand von > 10⁹ Ωcm und einer Dielektrizitätskonstante εγ im Bereich von 1,5 bis 4 und darin eingebettet 10 bis 60 Vol-%, bezogen auf das Volumen der gesamten Schicht, erste elektrisch leitende Teilchen (2) mit einer spezifischen Leitfähigkeit von 1 bis 100 (Ωm)⁻¹, enthaltend ein Bindemittel mit einem elektrischen Widerstand von >10⁹ Ohm cm und einer Dielektrizitätskonstante ε γ im Bereich von 1,5 bis 5 und in dem Bindemittel dispergierte zweite elektrisch leitende Teilchen (3) mit einer spezifischen Leitfähigkeit von 1000 bis 62 x 10⁸ (Ωm)⁻¹, die durch Berührung und Kettenbildung untereinander die Leitfähigkeit der ersten elektrisch leitenden Teilchen (2) bewirken, wobei die maximalen und minimalen Lineardimensionen der ersten elektrisch leitenden Teilchen (2) bei 1 bis 7 mm liegen und die ersten elektrisch leitenden Teilchen (2) gleichmäßig so über das Volumen des Bindemittels (1) verteilt sind, daß die Richtung ihrer maximalen oder minimalen Lineardimension im wesentlichen senkrecht zur Schicht liegt und die Schichtdicke (6) mit der die Senkrechte bestimmenden Lineardimension übereinstimmt und wobei die spezifische Leitfähigkeit aller ersten elektrisch leitenden Teilchen (2) sowie deren Größe annähernd gleich sind und
b) ein Substrat (9), das im Bereich der elektromagnetischen cm- und mm-Wellen angenähert vollständig reflektierend ist, auf das die Schicht entweder direkt oder über eine oder mehrere Zwischenschichten aufgebracht ist.

2. Material mit radarabsorbierenden Eigenschaften im Bereich der cm- und mm-Wellen nach Anspruch 1, dadurch gekennzeichnet, daß es in der Schicht aus Bindemittel (1) neben den leitfähigen Teilchen (2) weitere elektrisch leitfähige und/oder elektrisch nicht leitfähige teilchenförmige Stoffe (7) mit geringeren Lineardimensionen als die Teilchen (2) eingebettet enthält.

3. Material mit radarabsorbierenden Eigenschaften im Bereich der cm- und mm-Wellen nach Anspruch 1 oder 2, dadurch gekennzeichnet, daß es auf der Oberfläche der Schicht a) eine oder mehrere weitere Schichten (8) in einer Gesamtschichtdicke von <1 mm aufweist, deren Oberfläche im Spektralbereich von 0,1 bis 14 »m oder in Teilbereichen dieses Spektralbereiches tarnwirksame Eigenschaften aufweist.

4. Material mit radarabsorbierenden Eigenschaften im Bereich der cm- und mm-Wellen nach Anspruch 1 bis 3, dadurch gekennzeichnet, daß die Teilchen (2) die Form oder die angenäherte Form einer Kugel, eines Quaders, einer Linse, eines Plättchens oder eines Zylinders haben.

5. Material mit radarabsorbierenden Eigenschaften im Bereich der cm- und mm-Wellen nach einem oder mehreren der vorhergehenden Ansprüche, dadurch gekennzeichnet, daß die Teilchen (2) eine spezifische Leitfähigkeit von 5 bis 20 (Ωm)⁻¹ aufweisen.

6. Material mit radarabsorbierenden Eigenschaften im Bereich der cm- und mm-Wellen nach einem der Ansprüche 2 bis 5, dadurch gekennzeichnet, daß die neben den Teilchen (2) eingearbeiteten, zusätzlichen teilchenförmigen Stoffe (7) gasgefüllte Hohlkörper sind, und/oder, daß in das Bindemittel Gasbläschen mit geringeren Lineardimensionen als die Teilchen (2) eingearbeitet sind.

7. Material mit radarabsorbierenden Eigenschaften im Bereich der cm- und mm-Wellen nach einem der Ansprüche 1 bis 6, dadurch gekennzeichnet, daß es sich bei dem Substrat (9) um ein zu tarnendes Objekt oder um eine Folie oder Matte handelt, mit der ein zu tarnendes Objekt abgedeckt oder die auf ein zu tarnendes Objekt aufgebracht werden kann.

8. Verfahren zur Tarnung eines Objektes gegen Radarerfassung, **dadurch gekennzeichnet**, daß man
a) eine Schicht aus einem Bindemittel (1) mit einem elektrischen Widerstand von >10⁹ Ωcm und einer Dielektrizitätskonstante εγ im Bereich von 1,5 bis 4 und darin eingebettet 10 bis 60 Vol-%, bezogen auf das Volumen der genannten Schicht, erste elektrisch leitende Teilchen (2) mit einer spezifischen Leitfähigkeit von 1 bis 100 (Ωm)⁻¹, enthaltend ein Bindemittel mit einem elektrischen Widerstand von >10⁹ Ohm cm und einer Dielektrizitätskonstante εγ im Bereich von 1,5 bis 5 und in dem Bindemittel dispergierte zweite elektrisch leitende Teilchen (3) mit einer spezifischen Leitfähigkeit von 1000 bis 62 x 10⁸ (Ωm)⁻¹, die durch Berührung und Kettenbildung untereinander die Leitfähigkeit der ersten elektrisch leitenden Teilchen (2) bewirken, wobei die maximalen und minimalen Lineardimensionen der ersten elektrisch leitenden Teilchen (2) bei 1 bis 7 mm liegen und die ersten elektrisch leitenden Teilchen (2) gleichmäßig so über das Volumen des Bindemittels (1) verteilt sind, daß die Richtung ihrer maximalen oder minimalen Lineardimension im wesentlichen senkrecht zur Schicht liegt und die Schichtdicke (6) mit der die Senkrechte bestimmenden Lineardimension übereinstimmt und wobei die spezifische Leitfähigkeit aller ersten elektrisch leitenden Teilchen (2) sowie deren Größe annähernd gleich sind
b) auf ein Objekt bei dem es sich um ein Substrat handelt, das im Bereich der elektromagnetischen cm- oder mm-Wellen angenähert vollständig reflektierend ist, direkt oder auf eine oder mehrere auf dem Substrat befindliche Zwischenschichten aufbringt, oder
c) auf eine Folie oder Matte aufbringt, bei der es sich um ein Substrat handelt, das im Bereich der elektromagnetischen cm- oder mm-Wellen angenähert vollständig reflektierend ist, und die Folie oder Matte auf das zu tarnende Objekt aufbringt.

9. Verfahren nach Anspruch 8, dadurch gekennzeichnet, daß man eine Schicht aufbringt, wie sie in einem der Ansprüche 2 bis 7 definiert ist.

10. Verwendung von Beschichtungsmitteln auf der Basis eines Bindemittels mit einem elektrischen Widerstand von > 10⁹ Ωcm und einer Dielektrizitätskonstante εγ im Bereich von 1,5 bis 4 und darin gleichmäßig verteilt 10 bis 60 Vol-%, bezogen auf das Volumen des gesamten Beschichtungsmittels, erste elektrisch leitende Teilchen (2) mit einer spezifischen Leitfähigkeit von 1 bis 100 (Ωm)⁻¹, enthaltend ein Bindemittel mit einem elektrischen Widerstand von >10⁹ Ohm cm und einer Dielektrizitätskonstante εγ im Bereich von 1,5 bis 5 und in dem Bindemittel dispergierte zweite elektrisch leitende Teilchen (3) mit einer spezifischen Leitfähigkeit von 1000 bis 62 x 10⁸ (Ωm)⁻¹, die durch Berührung und Kettenbildung untereinander die Leitfähigkeit der ersten elektrisch leitenden Teilchen (2) bewirken, wobei die maximalen und minimalen Lineardimensionen der ersten elektrisch leitenden Teilchen (2) bei 1 bis 7 mm liegen, wobei die spezifische Leitfähigkeit aller ersten elektrisch leitenden Teilchen (2) sowie deren Größe annähernd gleich sind zur Herstellung von Materialien mit radarabsorbierenden Eigenschaften.

## Claims

1. Material with radar-absorbing properties in the range of the electromagnetic cm and mm waves, characterized in that it contains
a) a layer comprising a binder (1) with an electrical resistance of > 10⁹ Ω cm and a dielectric constant εγ in the range from 1.5 to 4 and embedded therein 10 to 60% by volume, related to the volume of the entire layer, of first electrically conducting particles (2) with a specific conductivity of 1 to 100 (Ω m)⁻¹, containing a binder with an electrical resistance of > 10⁹ Ohm cm and a dielectric constant εγ in the range from 1.5 to 5 and second electrically conducting particles (3) dispersed in the binder with a specific conductivity of 1000 to 62 x 10⁸ (Ω m)⁻¹, which bring about the conductivity of the first electrically conducting particles (2) through mutual contact and chain formation, the maximum and minimum linear dimensions of the first electrically conducting particles (2) being 1 to 7 mm and the first electrically conducting particles (2) being evenly distributed over the volume of the binder (1) in such a way that the direction of their maximum or minimum linear dimension is essentially perpendicular to the layer and the layer thickness (6) coincides with the linear dimension determining the perpendicular and the specific conductivity of all first electrically conducting particles (2) and their size being approximately equal and
b) a substrate (9) which is approximately completely reflecting in the range of the electromagnetic cm and mm waves and to which the layer is applied either directly or via one or more intermediate layers.

2. Material with radar-absorbing properties in the range of the cm and mm waves according to Claim 1, characterized in that it contains embedded in the layer of binder (1) in addition to the conducting particles (2), further electrically conducting and/or electrically non-conducting particulate substances (7) with smaller linear dimensions than the particles (2).

3. Material with radar-absorbing properties in the range of the cm and mm waves according to Claim 1 or 2, characterized in that it has on the surface of layer a) one or more further layers (8) in a total layer thickness of < 1 mm whose surface has camouflaging properties in the spectral region from 0.1 to 14 »m or in partial areas of this spectral region.

4. Material with radar-absorbing properties in the range of the cm and mm waves according to Claim 1 to 3, characterized in that the particles (2) have the shape or the approximate shape of a sphere, a rectangular parallelopiped, a lens, a platelet or a cylinder.

5. Material with radar-absorbing properties in the range of the cm and mm waves according to one or more of the preceding Claims, characterized in that the particles (2) have a specific conductivity of 5 to 20 (Ω m)⁻¹.

6. Material with radar-absorbing properties in the range of the cm and mm waves according to one of Claims 2 to 5, characterized in that the additional particulate substances (7) incorporated as well as the particles (2) are gas-filled hollow bodies, and/or that gas bubbles with smaller linear dimensions than the particles (2) are incorporated in the binder.

7. Material with radar-absorbing properties in the range of the cm and mm waves according to one of Claims 1 to 6, characterized in that the substrate (9) is an object to be camouflaged or a foil or mat with which an object to be camouflaged can be covered or which can be applied to an object to be camouflaged.

8. Process for camouflaging an object against radar detection, characterized in that
a) a layer comprising a binder (1) with an electrical resistance of > 10⁹ Ω cm and a dielectric constant εγ in the range from 1.5 to 4 and embedded therein 10 to 60% by volume, related to the volume of the said layer, of first electrically conducting particles (2) with a specific conductivity of 1 to 100 (Ω m)⁻¹, containing a binder with an electrical resistance of > 10⁹ Ohm cm and a dielectric constant εγ in the range from 1.5 to 5 and second electrically conducting particles (3) dispersed in the binder with a specific conductivity of 1000 to 62 x 10⁸ (Ω m)⁻¹, which bring about the conductivity of the first electrically conducting particles (2) through mutual contact and chain formation, the maximum and minimum linear dimensions of the first electrically conducting particles (2) being 1 to 7 mm and the first electrically conducting particles (2) being evenly distributed over the volume of the binder (1) in such a way that the direction of their maximum or minimum linear dimension is essentially perpendicular to the layer and the layer thickness (6) coincides with the linear dimension determining the perpendicular and the specific conductivity of all first electrically conducting particles (2) and their size being approximately equal and
b) is applied to an object which is a substrate which is approximately completely reflecting in the range of the electromagnetic cm and mm waves, either directly or to one or more intermediate layers on the substrate, or
c) is applied to a foil or mat which is a substrate which is approximately completely reflecting in the range of the electromagnetic cm and mm waves, and the foil or mat is applied to the object to be camouflaged.

9. Process according to Claim 8, characterized in that a layer as defined in one of Claims 2 to 7 is applied.

10. Use of coating agents based on a binder with an electrical resistance of > 10⁹ Ω cm and a dielectric constant εγ in the range from 1.5 to 4 and evenly distributed therein 10 to 60% by volume, related to the volume of the entire coating agent, of first electrically conducting particles (2) with a specific conductivity of 1 to 100 (Ω m)⁻¹, containing a binder with an electrical resistance of > 10⁹ Ohm cm and a dielectric constant εγ in the range from 1.5 to 5 and second electrically conducting particles (3) dispersed in the binder with a specific conductivity of 1000 to 62 x 10⁸ (Ω m)⁻¹, which bring about the conductivity of the first electrically conducting particles (2) through mutual contact and chain formation, the maximum and minimum linear dimensions of the first electrically conducting particles (2) being 1 to 7 mm and the specific conductivity of all first electrically conducting particles (2) and their size being approximately equal, for the manufacture of materials with radar-absorbing properties.

## Revendications

1. Matériau antiradar dans la gamme d'ondes électromagnétiques centimétriques et millimétriques, caractérisé en ce qu'il comporte :
a) Une couche constituée d'un liant (1) avec une résistance électrique de > 10⁹ Ω cm et une constante diélectrique εγ danc la zone de 1,5 à 4, et, intégrés dans cette couche, 10 à 60% en volume, par rapport au volume de la couche totale, de premières particules conductrices (2) avec une conductivité de 1 à 100 (Ω m)⁻¹, comportant un liant avec une résistance électrique de > 10⁹ ohm cm et une constante diélectrique εγ dans la zone de 1,5 à 5, et de deuxièmes particules conductrices (3) dispersées dans le liant avec une conductivité de 1000 à 62 x 10⁸ (Ω m)⁻¹, qui produisent par contact et par formation de chaînes entre elles la conductivité des premières particules conductrices (2), les dimensions linéaires maximales et minimales des premières particules conductrices (2) se situant entre 1 et 7 mm et les premières particules conductrices (2) étant dispersées de façon homogène sur le volume du liant (1) de façon à ce que le sens de leur dimension linéaire maximale ou minimale soit essentiellement vertical à la couche et que l'épaisseur de la couche (6) corresponde à la dimension linéaire définissant la verticale, la conductivité spécifique de l'ensemble des premières particules conductrices (2) ainsi que leur taille étant sensiblement identiques, et
b) un substrat (9) ayant dans la gamme d'ondes électromagnétiques centimétriques et millimétriques un pouvoir réfléchissant quasiment total et sur lequel la couche est appliquée soit directement soit par-dessus une ou plusieurs couches intermédiaires.

2. Matériau antiradar dans la gamme d'ondes centimétriques et millimétriques selon la revendication 1, caractérisé en ce qu'il comporte, intégrées dans la couche de liant, outre les particules conductrices (2), d'autres matières conductrices et/ou non conductrices en forme de particules (7) dont les dimensions linéaires sont inférieures à celles des particules (2).

3. Matériau antiradar dans la gamme d'ondes centimétriques et millimétriques selon l'une quelconque des revendications 1 ou 2, caractérisé en ce qu'il présente sur la surface de la couche a) une ou plusieurs autres couches (8) avec une épaisseur de la couche totale de <1mm, la surface de celles-ci présentant dans la région spectrale de 0,1 à 14 »m ou dans des secteurs de cette région spectrale des propriétés camouflantes.

4. Matériau antiradar dans la gamme d'ondes centimétriques et millimétriques selon l'une quelconque des revendications 1 à 3, caractérisé en ce que les particules (2) ont la forme ou la forme rapprochée d'une boule, d'un parallélépipède, d'une lentille, d'une lame ou d'un cylindre.

5. Matériau antiradar dans la gamme d'ondes centimétriques et millimétriques selon l'une quelconque ou plusieurs des revendications précédentes, caractérisé en ce que les particules (2) présentent une conductivité de 5 à 20 (Ω m)⁻¹.

6. Matériau antiradar dans la gamme d'ondes centimétriques et millimétriques selon l'une quelconque des revendications 2 à 5, caractérisé en ce que les matières supplémentaires en forme de particules (7) intégrées en plus des particules (2) sont des corps creux remplis de gaz et/ou que le liant contient des soufflures dont les dimensions linéaires sont inférieures à celles des particules (2).

7. Matériau antiradar dans la gamme d'ondes centimétriques et millimétriques selon l'une quelconque des revendications 1 à 6, caractérisé en ce que le substrat (9) est un objet à camoufler, ou un film ou mat permettant de couvrir un objet à camoufler ou sur lequel un objet à camoufler peut être appliqué.

8. Procédé de camouflage d'un objet contre la détection par radar, caractérisé en ce que
a) une couche constituée d'un liant (1) avec une résistance électrique de > 10⁹ Ω cm et une constante diélectrique εγ dans la zone 1,5 à 4, et, intégrés dans cette couche, 10 à 60 % en volume, par rapport au volume de ladite couche, de premières particules conductrices (2) avec une conductivité de 1 à 100 Ω m)⁻¹, comportant un liant avec une résistance électrique de > 10⁹ ohm cm et une constante diélectrique εγ dans la zone de 1,5 à 5, et de deuxièmes particules conductrices (3) dispersées dans le liant avec une conductivité de 1000 à 62 x 10⁸ (Ωm)⁻¹, qui produisent par contact et par formation de chaînes entre elles la conductivité des premières particules conductrices (2), les dimensions linéaires maximales et minimales des premières particules conductrices (2) se situant entre 1 et 7 mm et les premières particules conductrices (2) étant dispersées de façon homogène sur le volume du liant (1) de façon à ce que le sens de leur dimension linéaire maximale ou minimale soit essentiellement vertical à la couche et que l'épaisseur de la couche (6) corresponde à la dimension linéaire définissant la verticale, la conductivité de l'ensemble des premières particules conductrices (2) ainsi que leur taille étant sensiblement identiques
b) est appliquée sur un objet qui est un substrat ayant dans la gamme d'ondes électromagnétiques centimétriques et millimétriques un pouvoir réfléchissant quasiment total, cette couche étant appliquée soit directement soit par-dessus une ou plusieurs couches intermédiaires se trouvant sur le substrat,
c) sur un film ou un mat qui est un substrat ayant dans la gamme d'ondes électromagnétiques centimétriques et millimétriques un pouvoir réfléchissant quasiment total, et qu'on applique le film ou le mat sur l'objet à camoufler.

9. Procédé selon la revendication 8, caractérisé en ce que l'on applique une couche telle qu'elle est définie dans l'une quelconque des revendications 2 à 7.

10. Utilisation de moyens de revêtement sur la base d'un liant avec une résistance électrique de >10⁹ Ω cm et une constante diélectrique eg dans la zone de 1,5 à 4, et, répartis dans ceux-ci de façon homogène, de 10 à 60% en volume, par rapport au volume de la totalité du moyen de revêtement, de premières particules conductrices (2) avec une conductivité de 1 à 100 (Ω m)-1, comportant un liant avec une résistance électrique de > 109 ohm cm et une constante diélectrique eg dans la zone de 1,5 à 5, et de deuxièmes particules conductrices (3) dispersées dans le liant, avec une conductivité de 1000 à 62 x 10⁸(Ω m)⁻¹, qui produisent par contact et par formation de chaînes entre elles la conductivité des premières particules conductrices (2), les dimensions linéaires maximales et minimales des premières particules conductrices (2) se situant entre 1 et 7 mm et la conductivité de l'ensemble des premières particules conductrices (2) ainsi que leur taille étant sensiblement identiques, pour la fabrication de matériaux antiradars.
